# EUROPÄISCHE PATENTSCHRIFT

(11) **EP 3 263 621 B1**
(45) Veröffentlichungstag und Bekanntmachung des Hinweises auf die Patenterteilung: **11.03.2020**
(21) Anmeldenummer: 16177621.6
(22) Anmeldetag: 01.07.2016
(51) Int. Cl.: C08G 59/22, C08G 59/50

(54) **EPOXIDHARZMISCHUNG ALS GIESSHARZ**
EPOXY RESIN MIXTURE AS CASTING RESIN
MELANGE DE RESINE EPOXYDE EN TANT QUE RESINE DE COULEE

(43) Veröffentlichungstag der Anmeldung: 03.01.2018
(73) Patentinhaber: ZoE GmbH & Co. KG, 94209 Regen (DE)
(72) Erfinder: HOCK, Klaus, 94209 Regen (DE); HOCK, Franz-Josef, 94209 Regen (DE)
(74) Vertreter: Hannke Bittner & Partner

(56) Entgegenhaltungen:
- EP-A1- 1 285 939
- US-B1- 6 367 549
- DATABASE WPI Week 201530 Thomson Scientific, London, GB; AN 2015-22505H XP002765743, & CN 104 356 991 A (YANTAI SMITHDE EQUIP MFG CO LTD) 18. Februar 2015 (2015-02-18)
- DATABASE WPI Week 201404 Thomson Scientific, London, GB; AN 2013-P22367 XP002765744, & CN 103 013 411 A (SEREN XIAMEN NEW MATERIAL TECHNOLOGY CO) 3. April 2013 (2013-04-03)
- DATABASE WPI Week 201378 10. Januar 2017 (2017-01-10) Thomson Scientific, London, GB; AN 2013-H55872 XP002765746, & CN 102 838 957 A (JIANGSU TATECHEMICAL IND CO LTD) 26. Dezember 2012 (2012-12-26)

## Beschreibung

Die vorliegende Erfindung betrifft ein Gießharz mit einem aliphatischen Epoxidharz als Hauptbestandteil der Harzkomponente, die Verwendung eines solchen Gießharzes zur Einbettung von Objekten, sowie ein Verfahren zur Herstellung eines solchen Gießharzes.

### Stand der Technik

Für die Gestaltung des Lebensbereichs zu Hause wie auch in der Arbeit, etc., gibt es die Möglichkeit, dekorative Objekte wie Muscheln, Blumen, Steine oder ähnliches zu verwenden. Ein Problem hierbei ist das Anfallen von Staub, das bei komplizierter Geometrie des dekorativen Objekts mit größerem Reinigungsaufwand verbunden ist. Eine Möglichkeit, dies zu umgehen, ist das Einbringen in ein Gefäß, einen Behälter, einen Schrank oder ähnliches, wobei hier durch Ritzen jedoch immer noch Staub eindringen kann. Auch kann die Optik durch den Behälter, etc. beeinträchtigt werden.

Eine weitere Möglichkeit besteht darin, die Objekte, ggf. auch innerhalb von Behältnissen, einzubetten, wobei durch den Überzug der dekorativen Objekte ein Verstauben der dekorativen Objekte selbst vermieden werden kann. Ein Bedürfnis hierbei ist, dass die Objekte nach der Einbettung noch gut sichtbar sein sollen und bevorzugt nach der Einbettung ein Eindruck von klarem Wasser entstehen soll.

Eine Einbettung kann hierbei beispielsweise mit einem Gießharz erfolgen, welches rund um das dekorative Objekt herum eingegossen werden kann. Jedoch sollte auch bei der Verwendung eines Gießharzes nach dem erforderlichen Härten im ausgehärteten Zustand der Eindruck von klarem Wasser entstehen.

Hierzu ist es notwendig ein glasklares Gießharz zu formulieren, das glasklar aushärtet, und einen homogenen, blasenfreien Korpus ohne Sprungschicht ergibt, der sich durch hohe Lichtechtheit auszeichnet, um nachträglich keine Vergilbung zu bekommen.

Wünschenswert ist es zudem, einen angenehmen Geruch während der Herstellung und im Produkt zu erhalten.
Um die Illusion des klaren Wassers zu erhalten, muss das Gießharz schlüssig mit dem Behälter und Objekten zu einer Masse aushärten, welche einen ähnlichen Brechungsindex ergibt wie das Behältnis. Die Oberflächen sollten hierbei geschlossen und reinigungsfreundlich sein.
Die hierzu in Frage kommenden bekannten Gießharze, wie zum Beispiel Acrylgießharze oder Polyestergießharze, zeigen jedoch bei der Verwendung von großen Objekten, wie Muscheln, Blumen, Steinen, etc., eine zu hohe Exothermie bei der Reaktion. Hierbei kommt es nach der Aushärtung zu einem thermischen Schwund, wobei Delaminierungen von der Behälterwand und dem einzugießenden Objekt entstehen. Bei den Acrylaten ist hier bereits der reaktive Schwund schon zu groß.
Eine weitere Technik ist es die Objekte mit flüssigem Acrylat zu beschichten. Die hierbei erhaltenen Objekte haben jedoch eine porige, raue und schlecht zu reinigende Oberfläche. Auf Grund der hohen Exothermen dieser Systeme kann man natürlich das Objekt auch in mehreren Arbeitsschritten aufbauen. Hierbei entstehen jedoch optisch deutlich sichtbare Sprungschichten, welche unerwünscht sind.
Eine weitere Möglichkeit sind Epoxidharze, die einen sehr geringen Schwund aufweisen. Üblicherweise sind Epoxidharze mit dem Grundbaustein Bisphenol A aufgebaut. Dieser ergibt jedoch eine mehr oder weniger starke Vergilbung bei Bestrahlung mit UV Licht.
EP 1 285 939 A1 betrifft Epoxidharzzusammensetzungen, die (A) mindestens ein cycloaliphatisches Epoxidharz, (B) mindestens einen Anhydrid-Härter, (C) mindestens einen borhaltigen Katalysator, der im Wesentlichen halogenfrei ist, (D) mindestens einen Härtungsmodifizierungsmittel und gegebenenfalls (E) mindestens einen Hilfs-Härtungskatalysator umfassen.
US 6 367 549 B1 betrifft Verfahren und Dichtungszusammensetzungen mit extrem niedriger Dichte zum Abdichten von Rohren in Bohrlöchern, die Formationen durchdringen, die bei niedrigen hydrostatischen Drücken leicht brechen.
CN 104 356 991 A betrifft die Herstellung eines Aluminium-Epoxy-Reparaturmaterials. Das Aluminium-Epoxy-Reparaturmaterial umfaßt 30 bis 50 Teile modifiziertes Epoxyharz E-51, 10 bis 15 Teile 30 bis 50 mm sphärisches Aluminiummetallpulver, 20 bis 40 Teile eines reaktiven Epoxyharz-Verdünnungsmittels: 1,6-Glycoldiglycidylether 3-8 Teile Aluminiumsilberpulver, 2-6 Teile eines Silankupplungsmittels KH550 und 5-10 Teile Isophorondiamin.
CN 103 013 411 A betrifft einen isolierende und wärmeleitender Folienkleber. Der isolierte und wärmeleitende Folienklebstoff umfasst hauptsächlich die folgenden Massenbestandteile: 100 Teile niedrigviskoses Epoxidharz, 25 bis 66 Teile thermotropes Flüssigkristallpolymer, 80 bis 120 Teile flüssiges Anhydrid-Härtungsmittel, 10 bis 40 Teile umweltfreundliches Verdünnungsmittel, 0 bis 5 Teile kationischer Härtungsbeschleuniger, 550 bis 1000 Teile wärmeleitender Füllstoff, 0 bis 5 Teile Kupplungsmittel und 0 bis 3 Teile rheologisches Additiv. CN 102 838 957 A betrifft einen mit Haftvermittler modifizierten mit Siliciumdioxid dotierten cycloaliphatischen Epoxidharz-LED-Verpackungskleber. Der Klebstoff ist dadurch gekennzeichnet, dass er aus der Komponente A und der Komponente B zusammengesetzt ist, die in einem Verhältnis von 1: (0,9-1) für die Konstruktion gemischt sind. Insbesondere besteht die Komponente A aus cycloaliphatischem Epoxyharz, einem aktiven Verdünnungsmittel, einer transparenten blau-violetten purpurroten Farbstoffpaste, einem Entschäumungsmittel und einem Weichmacher. Die Komponente B besteht aus einem Härter, einem Beschleuniger, einem mit Silan-Haftvermittler modifizierten Nano-UV-Absorber, Polyol und einem Antioxidans. Es besteht somit die Aufgabe, Gießharze bereitzustellen, welche bei ausreichender Lichtechtheit eine gute Kontaktierung von Objekten ermöglichen und beim Härten einen geringen Schwund aufweisen. Zudem sollen diese Gießharze nach dem Härten eine gute Oberflächenbeschaffenheit aufweisen.

### Zusammenfassung der Erfindung

Die Erfinder haben herausgefunden, dass die bestehenden Anforderungen erfüllt werden können, indem man vorwiegend aliphatische Epoxidharze verwendet. Insbesondere di- oder trifunktionelle Reaktivverdünner haben sich als besonders geeignet erweisen.

In einem ersten Aspekt betrifft die vorliegende Erfindung ein Gießharz, umfassend mindestens eine Harzkomponente, die eine Epoxidgruppe umfasst, wobei mindestens 50 Gew.% der Harzkomponente ein aliphatisches Epoxidharz sind; einen aliphatischen Härter mit einer APHA-Hazen-Farbzahl von 20 oder weniger; mindestens ein Silanadditiv; und einen Duftstoff. Darüber hinaus betrifft die vorliegende Erfindung in einem weiteren Aspekt die Verwendung des erfindungsgemäßen Gießharzes zur Einbettung von Objekten.

Zudem wird ein Verfahren zur Herstellung eines Gießharzes offenbart, wobei mindestens eine Harzkomponente, die eine Epoxidgruppe umfasst, wobei mindestens 50 Gew.% der Harzkomponente ein aliphatisches Epoxidharz sind, ein aliphatischer Härter mit einer APHA-Hazen-Farbzahl von 20 oder weniger, mindestens ein Silanadditiv, und ein Duftstoff zueinander gegeben und miteinander vermischt werden. Durch das erfindungsgemäße Verfahren kann das erfindungsgemäße Gießharz hergestellt werden.

Weitere Aspekte der vorliegenden Erfindung sind den abhängigen Ansprüchen und der detaillierten Beschreibung zu entnehmen.

### Detaillierte Beschreibung der Erfindung

In einem ersten Aspekt betrifft die vorliegende Erfindung ein Gießharz, umfassend mindestens eine Harzkomponente, die eine Epoxidgruppe umfasst, wobei mindestens 50 Gew.% der Harzkomponente ein aliphatisches Epoxidharz sind;
einen aliphatischen Härter mit einer APHA-Hazen-Farbzahl von 20 oder weniger;
mindestens ein Silanadditiv; und einen Duftstoff.
Die Harzkomponente, die eine Epoxidgruppe umfasst, wobei mindestens 50 Gew.% der Harzkomponente ein aliphatisches Epoxidharz sind, ist hinsichtlich der weiteren Zusammensetzung der Harzkomponente, abgesehen von den mindestens 50 Gew.% aliphatisches Epoxidharz, bezogen auf die Harzkomponente, nicht besonders beschränkt. So können beispielsweise andere, nicht aliphatische Epoxidharze enthalten sein, aber auch andere Harze, welche mit Epoxidgruppen reagieren können, oder Mischungen davon. Insbesondere (Meth)Acrylharze sollten jedoch mit maximal 20 Gew.%, weiter bevorzugt maximal 8 Gew.%, bezogen auf die Harzkomponente, enthalten sein und insbesondere bevorzugt nicht, um den Schwund beim Härten zu verringern. Auch sollten Epoxidharze auf Basis von Bisphenol A bevorzugt mit maximal 20 Gew.%, weiter bevorzugt maximal 8 Gew.%, bezogen auf die Harzkomponente, enthalten sein und insbesondere bevorzugt nicht, um eine Vergilbung zu vermeiden. Es ist erfindungsgemäß nicht ausgeschlossen, dass mehr als ein aliphatisches Epoxidharz in der Harzkomponente enthalten ist, also dass die Harzkomponente beispielsweise eine Mischung aliphatischer Epoxidharze umfasst. Als aliphatische Epoxidharze sind Epoxidharze ohne aromatischen Bestandteil zu verstehen.
Gemäß bestimmten Ausführungsformen sind mindestens 80 Gew.%, bevorzugt mindestens 92 Gew.% der Harzkomponente, bezogen auf die Harzkomponente, ein aliphatisches Epoxidharz oder eine Mischung von aliphatischen Epoxidharzen. Gemäß bestimmten Ausführungsformen besteht die Harzkomponente aus aliphatischem Epoxidharz oder einer Mischung von aliphatischen Epoxidharzen.
Das aliphatische Epoxidharz ist erfindungsgemäß nicht besonders beschränkt. Epoxidharze auf Basis aliphatischer Komponenten zeigen eine gute Lichtechtheit, jedoch kann es bei gewissen aliphatischen Epoxidharzen noch zu Delaminierungen von in bestimmten Ausführungsformen verwendeten großen Steinen und ebenfalls von zumeist aus Glas bestehenden Behältern kommen. Zudem können auch hier die Exothermen bei größeren Objekten zu hoch sein, wobei es zum Sieden und zur Blasenbildung kommen kann, beispielsweise bei einer Gießhöhe von 10 cm oder einem Gesamtvolumen von mehr als 3 L.

Gemäß bestimmten Ausführungsformen weist das aliphatische Epoxidharz drei oder weniger Epoxidgruppen auf, bevorzugt 2 oder 3 Epoxidgruppen. Durch die Anwesenheit mehrerer Epoxidgruppen, welche jedoch nicht zu groß in der Anzahl sind, kann eine bessere Verfestigung des Gießharzes mit anschließender guter Haftung an Objekten erzielt werden.

Gemäß bestimmten Ausführungsformen ist das aliphatische Epoxidharz ein Reaktivverdünner. Insbesondere di- oder trifunktionelle Reaktivverdünner, insbesondere mit 2 oder 3 Epoxidgruppen, haben sich als besonders geeignet erweisen. Diese werden üblicherweise in Mengen bis zu 20% zu Stammharzen zugesetzt, um diese hinsichtlich der Flexibilität zu modifizieren und die Viskosität zu erniedrigen. Überraschenderweise lassen sich 100 % des Reaktivverdünners zu transparenten lichtechten Blöcken polymerisieren.

Als aliphatische Epoxidharze kommen gemäß bestimmten Ausführungsformen cycloaliphatische Epoxide, Glycidylether oder Glycidylester, bevorzugt jeweils mit 2 oder 3 Epoxidgruppen, insbesondere Glycidylether mit 2 oder 3 Epoxidgruppen zur Anwendung. Beispielhafte aliphatische Epoxidharze umfassen z.B. C2-C20 Alkylglycidylether und davon abgeleitete Verbindungen, beispielsweise 1,6-Hexandioldiglycidylether, 1,4-Butandioldiglycidylether, Trimethylolpropantriglycidylether, Polypropylenglycoldiglycidylether, Cyclohexandimethanoldiglycidylether und/oder 3,4-Epoxycyclohexoylmethyl-3,4-Epoxycyclohexylcarboxylat, von Glycerol abgeleitete, beispielsweise auch ethoxylierte oder propoxylierte Di- oder Triglycidylether, Triglycidylether von Trimethylolpropan, Polyoxyethylendiglycidylether, bevorzugt 1,6-Hexandioldiglycidylether, 1,4-Butandioldiglycidylether, und/oder Trimethylolpropantriglycidylether. Bevorzugt hat das aliphatische Epoxidharz bzw. das Epoxid ein Molekulargewicht bzw. gewichtsmittleres Molekulargewicht von weniger als 5000 g/mol, weiter bevorzugt weniger als 2000 g/mol, noch weiter bevorzugt weniger als 700 g/mol, besonders bevorzugt weniger als 500 g/mol.

Als zweite Komponente werden im erfindungsgemäßen Gießharz ein oder mehrere Härter eingesetzt, um die Epoxidharze aushärten zu können. Diese können gemäß bestimmten Ausführungsformen in einer Menge von 6 bis 41 Gew.%, bevorzugt 9 - 38 Gew.%, weiter bevorzugt 17 - 35 Gew.%, eingesetzt werden, bezogen auf das Gießharz. Härter zeigen hierbei gewöhnlich eine deutliche Eigenfärbung und ergeben bei der Reaktion eine leichte Gelbfärbung, insbesondere, wenn diese bei der Aushärtung Temperaturen über 60 °C erreichen oder wenn diese Entlüfter wie Benzylalkohol enthalten. Hierbei wird ebenfalls die Lichtechtheit deutlich herabgesetzt.

Zur Vermeidung einer Gelbfärbung und somit zum Erreichen einer verbesserten Lichtechtheit enthält das erfindungsgemäße Gießharz einen aliphatischen Härter mit einer APHA-Hazen-Farbzahl (apha) von 20 oder weniger, wie beispielsweise Isophorondiamin (3-Aminomethyl-3,5,5-trimethylcyclohexylamin). Die APHA-Hazen-Farbzahl, auch Platin-Cobalt-Farbzahl genannt, kann hierbei nach DIN ISO 6217 ermittelt werden. Es ist erfindungsgemäß natürlich nicht ausgeschlossen, dass mehr als ein aliphatischer Härter mit einer APHA-Hazen-Farbzahl von weniger als 20 enthalten ist.

Darüber hinaus ist das erfindungsgemäß enthaltene Silanadditiv nicht besonders beschränkt und kann eine oder mehrere funktionelle Gruppen aufweisen. Gemäß bestimmten Ausführungsformen weist das Silanadditiv mindestens eine Epoxy-, Amino- und/oder Mercaptogruppe auf.

Trotz der guten Affinität der Epoxygruppen zu beispielsweise silikatischen Oberflächen kann es auch mit der Harzkomponente, die eine Epoxidgruppe umfasst, wobei mindestens 50 Gew.% der Harzkomponente ein aliphatisches Epoxidharz sind (also der im erfindungsgemäßen Gießharz eingesetzten), zu Delaminierungen kommen, insbesondere bei voluminösen Objekten, die eingebettet werden sollen, z.B. Kieselsteine mit 5cm Durchmesser. Hier kann durch die Zugabe von einem Silan als Haftvermittler die Delaminierung unterbunden werden. Als Haftvermittler kommen insbesondere Silane mit Epoxy-, Amino-, und/oder Mercapto-Funktion oder eine Mischung aus diesen in Frage.

Gemäß bestimmten Ausführungsformen ist das Silanadditiv oder eine Mischung von Silanadditiven in einer Menge von 5 Gew.% oder weniger und 0,1 Gew.% oder mehr, bevorzugt 2 Gew.% oder weniger, insbesondere 0,2 - 0,5 Gew.%, bezogen auf das Gießharz, enthalten.

Um den Geruch des Härters zu überdecken können den Härtern bzw. dem erfindungsgemäßen Gießharz unterschiedliche Duftstoffe zugegeben werden. Hierbei können sowohl ein Duftstoff wie auch Duftstoffgemische zugegeben werden. Als Duftstoffe können hierbei natürliche Aromen wie Orangenterpene, Fichtennadelaromen, ätherische Öle wie Lavendel oder Pfefferminz, oder aber auch künstliche Duftstoffe zugesetzt werden. Überraschenderweise bleiben bei der Zugabe von Duftstoffen die Lichtechtheit und Transparenz erhalten und die Delaminierung kann reduziert und die Entlüftung stark verbessert werden. Durch den Duftstoff kann also eine entlüftende Wirkung beim Gießharz erzielt werden. Bei der Zugabe von Duftstoffen kann also auf herkömmliche Entlüfter, wie auch entsprechende Additive von Byk oder Tego, verzichtet werden, ohne dass eine Blasenbildung im ausgehärtetem Harz auftritt. Gemäß bestimmten Ausführungsformen enthält das erfindungsgemäße Gießharz somit keinen herkömmlichen Entlüfter - der nicht auch Duftstoff ist, wenn mindestens ein Duftstoff enthalten ist.

Gemäß bestimmten Ausführungsformen ist der Duftstoff bzw. eine Duftstoffmischung in einer Menge von 15 Gew.% oder weniger, bevorzugt 10 Gew.% oder weniger, insbesondere bevorzugt 0,2 bis 2,0 Gew.%, bezogen auf das Gießharz, enthalten.

Neben den oben genannten Komponenten kann das erfindungsgemäße Gießharz darüber hinaus auch ein Bläuungsmittel und/oder einen UV-Stabilisator umfassen. Das Bläuungsmittel und der UV-Stabilisator sind hierbei nicht besonders beschränkt. Durch das Bläuungsmittel und/oder den UV-Stabilisator kann die Lichtechtheit verbessert werden und eine Beibehaltung der Transparenz erzielt werden. UV-Stabilisatoren umfassen beispielsweise UV-Absorber oder Inhibitoren, welche ein Altern des gebildeten Polymeren verhindern können. Durch den Zusatz von Bläuungsmitteln und/oder UV-Stabilisatoren kann insbesondere eine Verbesserung der Lichtechtheit bei Gießharzen ermöglicht werden, in denen die Harzkomponente nicht nur aus aliphatischem Epoxidharz besteht, also beispielsweise bei Mischungen der Harzkomponente mit einem Anteil von 50 Gew.% oder mehr, 80 Gew.% oder mehr oder 92 Gew.% oder mehr, aber nicht 100 Gew.% aliphatischer Komponente. Wie auch bereits bei den anderen Komponenten können auch Mischungen aus zwei oder mehr Bläuungsmitteln und/oder zwei oder mehr UV-Stabilisatoren zugegeben werden, welche auf das jeweilige Harz, den Härter, den Verwendungszweck, etc. abgestimmt sein können.

Zudem kann das erfindungsgemäße Gießharz gemäß bestimmten Ausführungsformen eine Mannich-Base umfassen, wobei auch nicht ausgeschlossen ist, dass eine Mischung mehrerer Mannich-Basen enthalten ist. Als Mannich-Base ist hierbei das Produkt einer Mannich-Reaktion, also der Umsetzung eines Aldehyds mit einem primären oder sekundären Amin und einer CH-aciden Verbindung, zu verstehen. Durch die Mannichbasen kann hier eine Reaktionsbeschleunigung erzielt werden.

Darüber hinaus können weitere Additive im Gießharz enthalten sein, welche die Aushärtung des Gießharzes nicht negativ beeinflussen, beispielsweise (andere) lösliche Farbstoffe, welche entsprechende Farbeffekte hervorrufen können, z.B. auch in den Farben eines Regenbogens, grün, etc.

Im erfindungsgemäßen Gießharz ergänzen sich die Anteile der einzelnen Bestandteile zu 100 Gew.%.

In einem weiteren Aspekt betrifft die vorliegende Erfindung die Verwendung des erfindungsgemäßen Gießharzes zur Einbettung von Objekten. Insbesondere kann hierbei die Einbettung der Objekte innerhalb eines, bevorzugt transparenten, Behälters, erfolgen, der nach oben hin offen sein kann. Die Einbettung kann hierbei in einem Schritt oder auch stufenweise erfolgen, so dass beispielsweise verschiedene Objekte in verschiedenen Schichten eingebettet sind. Entsprechend richtet sich die Erfindung auch auf ein Verfahren zum Einbetten eines Objekts unter Verwendung des erfindungsgemäßen Gießharzes sowie ein Objekt, dass durch das entsprechende Verfahren, also unter Verwendung des erfindungsgemäßen Gießharzes, eingebettet ist. Das Objekt ist hier nicht besonders beschränkt und umfasst insbesondere dekorative Objekte wie, z.B. getrocknete, Pflanzen oder Pflanzenteile, Steine, Muscheln, etc.

In noch einem weiteren Aspekt betrifft die vorliegende Erfindung ein Verfahren zur Herstellung eines Gießharzes, wobei mindestens eine Harzkomponente, die eine Epoxidgruppe umfasst, wobei mindestens 50 Gew.% der Harzkomponente ein aliphatisches Epoxidharz sind, ein aliphatischer Härter mit einer APHA-Hazen-Farbzahl von 20 oder weniger, mindestens ein Silanadditiv, und ein Duftstoff zueinander gegeben und miteinander vermischt werden.

Gemäß bestimmten Ausführungsformen wird weiter ein Bläuungsmittel und/oder ein UV-Stabilisator und/oder eine Mannich-Base zugegeben.

Die Reihenfolge des Zueinander Gebens ist hierbei nicht besonders beschränkt und kann geeignet, abhängig von den jeweils verwendeten Komponenten, geeignet eingestellt werden. Auch ist das Mischen nicht besonders beschränkt und kann beispielsweise unter Verwendung üblicher Mischer wie aber auch manuell erfolgen.

Die einzelnen Komponenten im Verfahren wie auch weitere mögliche Additive entsprechen hierbei den im Zusammenhang mit dem erfindungsgemäßen Gießharz genannten Komponenten.

Die Erfindung wird im Anschluss anhand einiger beispielhafter Ausführungsformen dargestellt, die diese jedoch nicht einschränken.

### Beispiele

Es wird ein Gießharz durch Vermischen von 73 Gew.% Epoxidharz-Reaktivverdünner als Harzkomponente, 25 Gew.% eines aliphatischen Härters mit einer APHA-Hazen-Farbzahl von weniger als 20, 0,4 Gew.% eines Epoxysilans und 1,6 Gew.% Fichtennadelaroma hergestellt. Dieses wird auf eine Ansammlung von bunten Steinen in einem Glasbehälter gegossen und ausgehärtet. Das Gießharz härtet gut aus und delaminiert - auch nach längerer Zeit - nicht von den Steinen und dem Glasbehälter. Eine Blasenbildung im Harz wurde nicht beobachtet. Das so hergestellte dekorative Objekt verströmt einen angenehmen Geruch von Fichtennadeln.

## Patentansprüche

1. Gießharz, umfassend mindestens eine Harzkomponente, die eine Epoxidgruppe umfasst, wobei mindestens 50 Gew.% der Harzkomponente ein aliphatisches Epoxidharz sind; einen aliphatischen Härter mit einer APHA-Hazen-Farbzahl nach DIN ISO 6217 von 20 oder weniger; mindestens ein Silanadditiv; und einen Duftstoff.

2. Gießharz nach Anspruch 1, wobei mindestens 80 Gew.% der Harzkomponente ein aliphatisches Epoxidharz sind.

3. Gießharz nach Anspruch 1 oder 2, wobei das Silanadditiv mindestens eine Epoxy-, Amino- und/oder Mercaptogruppe aufweist.

4. Gießharz nach einem der vorigen Ansprüche, wobei das aliphatische Epoxidharz drei oder weniger Epoxidgruppen aufweist.

5. Gießharz nach Anspruch 4, wobei das aliphatische Epoxidharz 2 oder 3 Epoxidgruppen aufweist.

6. Gießharz nach einem der vorigen Ansprüche, wobei die Harzkomponente aus aliphatischem Epoxidharz besteht.

7. Gießharz nach Anspruch 6, wobei das aliphatische Epoxidharz ein Reaktivverdünner ist.

8. Gießharz nach einem der vorigen Ansprüche, weiter umfassend ein Bläuungsmittel und/oder einen UV-Stabilisator.

9. Gießharz nach einem der vorigen Ansprüche, weiter umfassend eine Mannich-Base.

10. Gießharz nach einem der vorigen Ansprüche, wobei der Duftstoff in einer Menge von 15 Gew.% oder weniger, bezogen auf das Gießharz, enthalten ist.

11. Gießharz nach einem der vorigen Ansprüche, wobei das Silanadditiv in einer Menge von 5 Gew.% oder weniger, bezogen auf das Gießharz, enthalten ist.

12. Verwendung eines Gießharzes nach einem der vorigen Ansprüche zur Einbettung von Objekten.

13. Verfahren zur Herstellung eines Gießharzes, wobei mindestens eine Harzkomponente, die eine Epoxidgruppe umfasst, wobei mindestens 50 Gew.% der Harzkomponente ein aliphatisches Epoxidharz sind, ein aliphatischer Härter mit einer APHA-Hazen-Farbzahl nach DIN ISO 6217 von 20 oder weniger, mindestens ein Silanadditiv, und ein Duftstoff zueinander gegeben und miteinander vermischt werden.

14. Verfahren zur Herstellung eines Gießharzes nach Anspruch 13, wobei weiter ein Bläuungsmittel und/oder ein UV-Stabilisator zugegeben werden.

15. Verfahren zur Herstellung eines Gießharzes nach Anspruch 13 oder 14, wobei weiter eine Mannich-Base zugegeben wird.

## Claims

1. Casting resin, comprising:
at least one resin component which comprises an epoxy group, at least 50 % by weight of the resin component being an aliphatic epoxy resin;
an aliphatic curing agent which has an APHA/Hazen colour number according to DIN ISO 6217 of 20 or less;
at least one silane additive; and a fragrance.

2. Casting resin according to claim 1, wherein at least 80 % by weight of the resin component is an aliphatic epoxy resin.

3. Casting resin according to claim 1 or 2, wherein the silane additive has at least one epoxy, amino and/or mercapto group.

4. Casting resin according to any of the preceding claims, wherein the aliphatic epoxy resin has three or less epoxy groups.

5. Casting resin according to claim 4, wherein the aliphatic epoxy resin has 2 or 3 epoxy groups.

6. Casting resin according to any of the preceding claims, wherein the resin component consists of aliphatic epoxy resin.

7. Casting resin according to claim 6, wherein the aliphatic epoxy resin is a reactive diluent.

8. Casting resin according to any of the preceding claims, further comprising a bluing agent and/or a UV stabiliser.

9. Casting resin according to any of the preceding claims, further comprising a Mannich base.

10. Casting resin according to any of the preceding claims, wherein the fragrance is contained in an amount of 15 % by weight or less based on the casting resin.

11. Casting resin according to any of the preceding claims, wherein the silane additive is contained in an amount of 5 % by weight or less based on the casting resin.

12. Use of a casting resin according to any of the preceding claims for embedding of objects.

13. Method for manufacturing a casting resin, wherein at least one resin component which comprises an epoxy group, at least 50 % by weight of the resin component being an aliphatic epoxy resin, an aliphatic curing agent which has an APHA/Hazen colour number according to DIN ISO 6217 of 20 or less, at least one silane additive, and a fragrance are added together and mixed together.

14. Method for manufacturing a casting resin according to claim 13, wherein a bluing agent and/or a UV stabiliser are further added.

15. Method for manufacturing a casting resin according to claim 13 or 14, wherein a Mannich base is further added.

## Revendications

1. Résine de moulage, comprenant :
au moins une composante de résine qui comprend un groupe époxyde, dans laquelle au moins 50 % en poids de la composante de résine sont une résine époxyde aliphatique ;
un durcisseur aliphatique avec une échelle de couleur APHA-Hazen de 20 ou moins selon la norme DIN ISO 6217 ;
au moins un additif silane ; et une fragrance.

2. Résine de moulage selon la revendication 1, dans laquelle au moins 80 % en poids de la composante de résine sont une résine époxyde aliphatique.

3. Résine de moulage selon la revendication 1 ou la revendication 2, dans laquelle l'additif silane présente au moins un groupe époxyde, amino et/ou mercapto.

4. Résine de moulage selon l'une des revendications précédentes, dans laquelle la résine époxyde aliphatique présente trois ou moins trois groupes époxydes.

5. Résine de moulage selon la revendication 4, dans laquelle la résine époxyde aliphatique présente 2 ou 3 groupes époxydes.

6. Résine de moulage selon l'une des revendications précédentes, dans laquelle la composante de résine est constituée de résine époxyde aliphatique.

7. Résine de moulage selon la revendication 6, dans laquelle la résine époxyde aliphatique est un diluant réactif.

8. Résine de moulage selon l'une des revendications précédentes, comprenant en outre un agents de bleuissement et/ou un stabilisant UV.

9. Résine de moulage selon l'une des revendications précédentes, comprenant en outre une base de Mannich.

10. Résine de moulage selon l'une des revendications précédentes, dans laquelle la fragrance est contenu dans une quantité inférieure ou égale à 15 % en poids, par rapport à la résine de moulage.

11. Résine de moulage selon l'une des revendications précédentes, dans laquelle l'additif silane est contenu dans une quantité inférieure ou égale à 5 % en poids, par rapport à la résine de moulage.

12. Utilisation d'une résine de moulage selon l'une des revendications précédentes pour l'inclusion d'objets.

13. Procédé de fabrication d'une résine de moulage, dans lequel au moins une composante de résine qui comprend un groupe époxyde, dans laquelle au moins 50 % en poids de la composante de résine sont une résine époxyde aliphatique, un durcisseur aliphatique avec une échelle de couleur APHA-Hazen de 20 ou moins selon la norme DIN ISO 6217, au moins un additif silane, et une fragrance sont ajoutés les uns aux autres et sont mélangés ensemble.

14. Procédé de fabrication d'une résine de moulage selon la revendication 13, dans lequel on ajoute en outre un agents de bleuissement et/ou un stabilisant UV.

15. Procédé de fabrication d'une résine de moulage selon la revendication 13 ou la revendication 14, dans lequel on ajoute en outre une base de Mannich.
